# EUROPEAN PATENT SPECIFICATION

(11) **EP 3 550 105 B1**
(45) Date of publication and mention of the grant of the patent: **18.11.2020**
(21) Application number: 19162654.8
(22) Date of filing: 13.03.2019
(51) Int. Cl.: F01D 5/02, F01D 5/10, F01D 5/16, F01D 5/26, F01D 5/30, F01D 5/34, F01D 25/06

(54) **GAS TURBINE ENGINE ROTOR DISK**
GASTURBINENMOTORROTORSCHEIBE
DISQUE DE ROTOR DE MOTEUR À TURBINE À GAZ

(30) Priority: 15.03.2018 US 201815921825
(43) Date of publication of application: 09.10.2019
(73) Proprietor: United Technologies Corporation, Farmington, CT 06032 (US)
(72) Inventor: QUINN, Ryan Hamilton, Berlin, CT 06037 (US)
(74) Representative: Dehns

(56) References cited:
- EP-A1- 3 054 088
- EP-A2- 2 412 924
- EP-A2- 2 677 119
- US-A1- 2013 195 660

## Description

### BACKGROUND

A gas turbine engine typically includes a fan section, a compressor section, a combustor section, and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section.

During operation of the gas turbine engine, the rotating portions of the engine, such as rotor sections in the turbine and compressor sections, are subject to substantial amounts of stress. Therefore, there is a need to reduce the amount of stress the rotating portions experience in order to extend the life of these components.

EP 3 054 088 A1 discloses prior art gas turbine engine rotor disk balancing.

US 2013/195660 A1 discloses prior art compressor disk bleed air scallops.

EP 2 677 119 A2 discloses a prior art rotor balancing method.

EP 2 412 924 A2 discloses a prior art disk spacer for a gas engine turbine and a method for providing a rotor assembly.

### SUMMARY

In accordance with a first aspect of the present invention, there is provided a rotor disk as claimed in claim 1.

In an embodiment of the above, the mismatch protrusion includes a mismatch plateau that faces in an axial direction and a first mismatch fillet that extends from a radially outer edge of the mismatch plateau to a first mismatch web surface.

In a further embodiment of any of the above, the mismatch protrusion includes a second mismatch fillet that extends from a radially inner edge of the mismatch plateau to a second mismatch web surface.

In a further embodiment of any of the above, the first mismatch web surface and the second mismatch web surface are on a common axial side of the mismatch plateau.

In a further embodiment of any of the above, a radius of the first mismatch fillet and the second mismatch fillet is between 0.230 and 0.270 of an inch (5.842 and 6.858 mm).

In a further embodiment of any of the above, the balancing protrusion includes a balancing plateau that faces in an axial direction and a first balancing fillet that extends from a radially outer edge of the balancing plateau to a first balancing web surface.

In a further embodiment of any of the above, the balancing protrusion includes a second balancing fillet that extends from a radially inner edge of the balancing plateau to a second balancing web surface.

In a further embodiment of any of the above, the first balancing web surface and the second balancing web surface are on a common axial side of the balancing plateau.

In a further embodiment of any of the above, the first axially facing surface and the second axially facing surface are directed in opposite axial directions.

In accordance with a second aspect of the present invention, there is provided a gas turbine engine as claimed in claim 10.

In a further embodiment of any of the above, the mismatch protrusion includes a mismatch plateau facing in an axial direction. A first mismatch fillet extends from a radially outer edge of the mismatch plateau to a first mismatch web surface. A second mismatch fillet extends from a radially inner edge of the mismatch plateau to a second mismatch web surface.

In a further embodiment of any of the above, the first mismatch web surface and the second mismatch web surface are on a common axial side of the mismatch plateau.

In a further embodiment of any of the above, the balancing protrusion includes a balancing plateau that faces in an axial direction. A first balancing fillet extends from a radially outer edge of the balancing plateau to a first balancing web surface. A second balancing fillet extends from a radially inner edge of the balancing plateau to a second balancing web surface.

In a further embodiment of any of the above, the first balancing web surface and the second balancing web surface are on a common axial side of the balancing plateau.

In a further embodiment of any of the above, the first axially facing surface and the second axially facing surface are directed in opposite axial directions.

In accordance with a third aspect of the present invention, there is provided a method of forming rotor disk for a gas turbine engine as claimed in claim 11.

In a further embodiment of any of the above, the method includes forming a balancing protrusion that has a balancing plateau that includes the steps of machining a first balancing web surface on a second axial side of the web and forming a first balancing fillet that extends from a radially outer edge of the balancing plateau. A second balancing web surface on the second axial side of the web is machined. A second balancing fillet that extends from a radially inner edge of the balancing plateau is formed. A balancing plateau separates the first balancing web surface from the second balancing web surface.

In a further embodiment of any of the above, the step of machining the first mismatch web surface includes forming a first mismatch fillet. The step of machining the second mismatch web surface includes forming a second mismatch fillet. The first mismatch web surface and the second mismatch web surface are located on a common axial side of the mismatch plateau.

In a further embodiment of any of the above, the first mismatch fillet and the second mismatch fillet include a radius of 0.230 to 0.280 of an inch (5.842 to 7.112 mm).

### BRIEF DESCRIPTION OF THE DRAWINGS

Figure 1 is a schematic view of a gas turbine engine according to a first non-limiting example.
Figure 2 is an enlarged view of a high pressure turbine section.
Figure 3 is an enlarged view of mismatch protrusion.
Figure 4 is an enlarged view of a balancing protrusion.
Figure 5 is illustrates forming a first portion of the mismatch protrusion of Figures 2 and 3.
Figure 6 illustrates forming a section portion of the mismatch protrusion of Figures 2 and 3.

### DETAILED DESCRIPTION

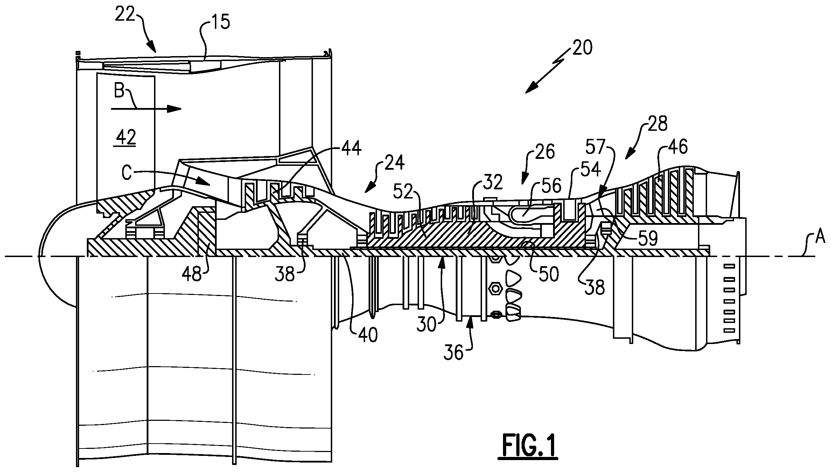

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a nacelle 15, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150 ft / second (350.5 meters/second).

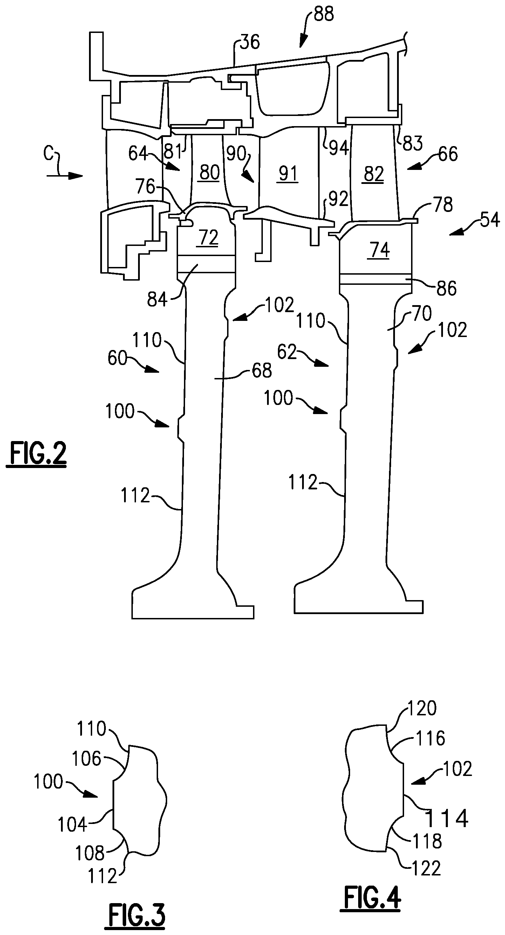

Figure 2 illustrates an enlarged schematic view of the high pressure turbine 54, however, other sections of the gas turbine engine 20 could benefit from this disclosure, such as the low pressure turbine 46 and the compressor section 24. The high pressure turbine 54 includes a two-stage turbine section with a first rotor assembly 60 and a second rotor assembly 62.

The first rotor assembly 60 includes a first array of rotor blades 64 circumferentially spaced around a first disk 68 and the second rotor assembly 62 includes a second array of rotor blades 66 circumferentially spaced around a second disk 70. Each of the first and second array of rotor blades 64, 66 include a respective first root portion 72 and a second root portion 74, a first platform 76 and a second platform 78, and a first airfoil 80 and a second airfoil 82. Each of the first and second root portions 72, 74 is received within a respective first rim and a second rim 84, 86 of the first and second disk 68, 70. The first airfoil 80 and the second airfoil 82 extend radially outward toward a first and second blade outer air seal (BOAS) assembly 81, 83, respectively.

The first and second array of rotor blades 64, 66 are disposed in the core flow path C that is pressurized in the compressor section 24 then heated to a working temperature in the combustor section 26. The first and second platforms 76, 78 separate a gas path side inclusive of the first and second airfoils 80, 82 and a non-gas path side inclusive of the first and second root portions 72, 74.

A shroud assembly 88 within the engine case structure 36 between the first rotor assembly 60 and the second rotor assembly 62 directs the hot gas core airflow in the core flow path from the first array of rotor blades 64 to the second array of rotor blades 66. The shroud assembly 88 includes an array of vanes 90 that each include at least two airfoils 91 that extend between a respective inner vane platform 92 and an outer vane platform 94. The outer vane platform 94 of the vane 90 may at least partially engage the first and second BOAS 81, 83.

As shown in Figures 2-4, the first disk 68 and the second disk 70 each include a mismatch protrusion 100 and a balancing protrusion 102. The mismatch protrusion 100 is located on an axially forward facing side of the first and second disks 68, 70 and the balancing protrusion is located on an axially aft facing side of the first and second disks 68, 70.

The mismatch protrusion 100 includes a mismatch plateau 104 defined by a radially outer fillet 106 and a radially inner fillet 108. The radially outer fillet 106 transitions from the mismatch plateau 104 to a first mismatch web surface 110 located radially outward from the mismatch protrusion 100. The radially inner fillet 108 transitions form the mismatch plateau 104 to a second mismatch web surface 112 located radially inward from the mismatch protrusion 100. The radially inner and outer fillets 108, 106 include a radius of between 0.230 and 0.270 thousandths of an inch (5.842 and 6.858 mm).

The first and second mismatch web surfaces 110 and 112 are located on a common axial side of the mismatch plateau 104, such that the first and second mismatch web surfaces 110, 112 are either forward or aft of the mismatch plateau 104. Moreover, the first and second mismatch web surfaces 110, 112 adjacent the outer and inner fillets 106, 108, respectively, are equidistant from the mismatch plateau 104. The location of the first and second mismatch web surfaces 110, 112 relative to the mismatch plateau 104 reduces the stress concentration at the intersection of the outer and inner fillets 106, 108 and the mismatch plateau 104. The mismatch protrusion 100 is located in the radially inner half of the first and second disks 68, 70.

Without having the mismatch plateau 104, only a single fillet would exist between the first and second mismatch web surfaces 110, 112, which would result in a higher stress concentration. Furthermore, prior attempts to match the first and second mismatch web surfaces 110, 112 resulted in even high stress concentrations because the fillet the between the two machined web surface is on the order of one tenth the size of the radius of the inner and outer fillets 108, 106.

The balancing protrusion 102 includes a balancing plateau 114 defined by a radially outer fillet 116 and a radially inner fillet 118. The radially outer fillet 116 transitions from the balancing plateau 114 to a first balancing web surface 120 located radially outward from the balancing protrusion 102. The radially inner fillet 118 transitions form the balancing plateau 114 to a second balancing web surface 122 located radially inward from the balancing protrusion 102. The first and second balancing web surfaces 120 and 122 are located on a common axial side of the balancing plateau 114, such that the first and second balancing web surfaces 120, 122 are either forward or aft of the balancing plateau 114.

The balancing protrusion 102 is located in a radially outer quarter of the first and second disks 68, 70. The balancing protrusion 102 is located radially outward of the mismatch protrusion 100 because the balancing protrusion 102 has a greater influence and balancing one of the first and second rotor disks 68, 70 the further it is located from the axis of rotation A.

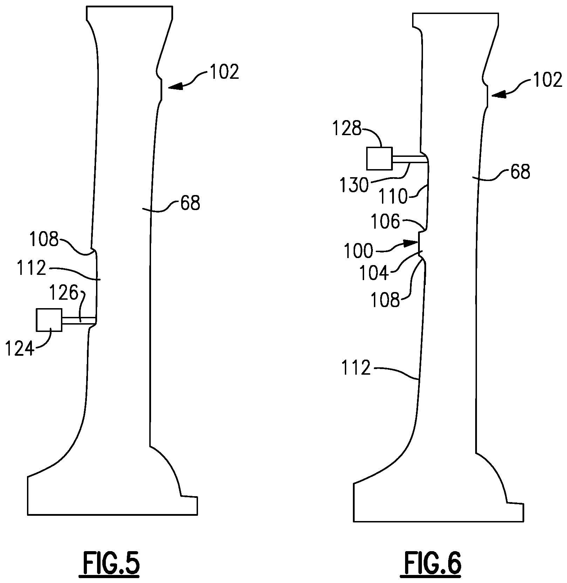

As shown in Figures 5 and 6, the mismatch protrusion 100 is formed through machining. A tool 124 having a bit 126 engages the first disk 68 to form the radially inner fillet 118 and the second mismatch web surface 112 as shown in Figure 5. Due to the geometry of the first disk 68, a different tool 128 and/or a different bit 130 might be needed to form the radially outer fillet 116 and the first mismatch web surface 110 as shown in Figure 6. The mismatch plateau 104 functions as an indexing location on the first disk 68 such that when the first and second mismatch web surfaces 110, 112. The mismatch protrusion 100 on the second disk 70 is formed in a similar manner.

The preceding description is exemplary rather than limiting in nature. Variations and modifications may become apparent to those skilled in the art that do not necessarily depart from the essence of this disclosure. The scope of legal protection given to this disclosure can only be determined by studying the following claims.

## Claims

1. A rotor disk (68, 70) comprising:
a web extending in a radial direction from a rim on a radially outer end to a bore on a radially inner end, the web including:
a mismatch protrusion (100) on a first axially facing surface of the web; and
a balancing protrusion (102) on a second axially facing surface of the web;
**characterized in that**
the mismatch protrusion (100) is located in a radially inner half of the rotor disk (68, 70) and the balancing protrusion (102) is located in a radially outer quarter of the rotor disk (68, 70).

2. The rotor disk (68, 70) of claim 1, wherein the mismatch protrusion (100) includes a mismatch plateau (104) facing in an axial direction and a first mismatch fillet (106) extending from a radially outer edge of the mismatch plateau (104) to a first mismatch web surface (110).

3. The rotor disk (68, 70) of claim 2, wherein the mismatch protrusion (100) includes a second mismatch fillet (108) extending from a radially inner edge of the mismatch plateau (104) to a second mismatch web surface (112).

4. The rotor disk (68, 70) of claim 3, wherein the first mismatch web surface (110) and the second mismatch web surface (112) are on a common axial side of the mismatch plateau (104).

5. The rotor disk (68, 70) of claim 3 or 4, wherein a radius of the first mismatch fillet (106) and the second mismatch fillet (108) is between 0.230 and 0.270 of an inch (5.842 and 6.858 mm).

6. The rotor disk (68, 70) of claim 3, 4 or 5, wherein the balancing protrusion (102) includes a balancing plateau (114) facing in an axial direction and a first balancing fillet (116) extending from a radially outer edge of the balancing plateau (114) to a first balancing web surface (120).

7. The rotor disk (68, 70) of claim 6, wherein the balancing protrusion (102) includes a second balancing fillet (118) extending from a radially inner edge of the balancing plateau (114) to a second balancing web surface (122).

8. The rotor disk (68, 70) of claim 7, wherein the first balancing web surface (120) and the second balancing web surface (122) are on a common axial side of the balancing plateau (114).

9. The rotor disk (68, 70) of any preceding claim, wherein the first axially facing surface and the second axially facing surface are directed in opposite axial directions.

10. A gas turbine engine (20) comprising:
a compressor section (24); and
a turbine section (28) located downstream of the compressor section (24), wherein at least one of the compressor section or the turbine section includes the rotor disk (68, 70) of any preceding claim.

11. A method of forming a rotor disk (68, 70) for a gas turbine engine comprising the steps of:
forming a mismatch protrusion (100) having a mismatch plateau (104) including the steps of:
machining a first mismatch web surface (110) on a first axial side of a web; and
machining a second mismatch web surface (112) on the first axial side of the web, wherein the mismatch plateau (104) separates the first mismatch web surface (110) from the second mismatch web surface (112); and
forming a balancing protrusion (102) having a balancing plateau (114) including the steps of:
machining a first balancing web surface (120) on a second axial side of the web and forming a first balancing fillet (116) extending from a radially outer edge of the balancing plateau (114); and
machining a second balancing web surface (122) on the second axial side of the web and forming a second balancing fillet (118) extending from a radially inner edge of the balancing plateau (114), wherein the balancing plateau (114) separates the first balancing web surface (120) from the second balancing web surface (122);
**characterized in that**
the mismatch protrusion (100) is located in a radially inner half of the rotor disk (68, 70) and the balancing protrusion (102) is located in a radially outer quarter of the rotor disk (68, 70).

12. The method of claim 11, wherein the step of machining the first mismatch web surface (110) includes forming a first mismatch fillet (106) and the step of machining the second mismatch web surface (112) includes forming a second mismatch fillet (108), and the first mismatch web surface (110) and the second mismatch web surface (112) being located on a common axial side of the mismatch plateau (104).

13. The method of claim 12, wherein the first mismatch fillet (106) and the second mismatch fillet (108) include a radius of 0.230 to 0.280 of an inch (5.842 to 7.112 mm).

## Patentansprüche

1. Rotorscheibe (68, 70), umfassend:
einen Steg, der sich in einer radialen Richtung von einem Rand an einem radial äußeren Ende zu einer Bohrung an einem radial inneren Ende erstreckt, wobei der Steg Folgendes beinhaltet:
einen Versatzvorsprung (100) an einer ersten in Axialrichtung gewandten Fläche des Stegs; und
einen Ausgleichsvorsprung (102) an einer zweiten in Axialrichtung gewandten Fläche des Stegs;
**dadurch gekennzeichnet, dass**
sich der Versatzvorsprung (100) in einer radial inneren Hälfte der Rotorscheibe (68, 70) befindet und sich der Ausgleichsvorsprung (102) in einem radial äußeren Viertel der Rotorscheibe (68, 70) befindet.

2. Rotorscheibe (68, 70) nach Anspruch 1, wobei der Versatzvorsprung (100) eine Versatzebene (104), die in eine axiale Richtung gewandt ist, und eine erste Versatzrundung (106) beinhaltet, die sich von einer radial äußeren Kante der Versatzebene (104) zu einer ersten Versatzstegfläche (110) erstreckt.

3. Rotorscheibe (68, 70) nach Anspruch 2, wobei der Versatzvorsprung (100) eine zweite Versatzrundung (108) beinhaltet, die sich von einer radial inneren Kante der Versatzebene (104) zu einer zweiten Versatzstegfläche (112) erstreckt.

4. Rotorscheibe (68, 70) nach Anspruch 3, wobei sich die erste Versatzstegfläche (110) und die zweite Versatzstegfläche (112) auf einer gemeinsamen axialen Seite der Versatzebene (104) befinden.

5. Rotorscheibe (68, 70) nach Anspruch 3 oder 4, wobei ein Radius der ersten Versatzrundung (106) und der zweiten Versatzrundung (108) zwischen 0,230 und 0,270 Zoll (5,842 und 6,858 mm) beträgt.

6. Rotorscheibe (68, 70) nach Anspruch 3, 4 oder 5, wobei der Ausgleichsvorsprung (102) eine Ausgleichsebene (114), die in eine axiale Richtung gewandt ist, und eine erste Ausgleichsrundung (116) beinhaltet, die sich von einer radial äußeren Kante der Ausgleichsebene (114) zu einer ersten Ausgleichsstegfläche (120) erstreckt.

7. Rotorscheibe (68, 70) nach Anspruch 6, wobei der Ausgleichsvorsprung (102) eine zweite Ausgleichsrundung (118) beinhaltet, die sich von einer radial inneren Kante der Ausgleichsebene (114) zu einer zweiten Ausgleichsstegfläche (122) erstreckt.

8. Rotorscheibe (68, 70) nach Anspruch 7, wobei sich die erste Ausgleichsstegfläche (120) und die zweite Ausgleichsstegfläche (122) auf einer gemeinsamen axialen Seite der Ausgleichsebene (114) befinden.

9. Rotorscheibe (68, 70) nach einem der vorhergehenden Ansprüche, wobei die erste in Axialrichtung gewandte Fläche und die zweite in Axialrichtung gewandte Fläche in entgegengesetzte axiale Richtungen gerichtet sind.

10. Gasturbinentriebwerk (20), umfassend:
einen Verdichterabschnitt (24); und
einen Turbinenabschnitt (28), der sich stromabwärts des Verdichterabschnitts (24) befindet, wobei mindestens einer von dem Verdichterabschnitt oder dem Turbinenabschnitt die Rotorscheibe (68, 70) nach einem der vorhergehenden Ansprüche beinhaltet.

11. Verfahren zum Bilden einer Rotorscheibe (68, 70) für ein Gasturbinentriebwerk, das die folgenden Schritte umfasst:
Bilden eines Versatzvorsprungs (100) mit einer Versatzebene (104), einschließlich der folgenden Schritte:
Fertigen einer ersten Versatzstegfläche (110) auf einer ersten axialen Seite eines Stegs; und
Fertigen einer zweiten Versatzstegfläche (112) auf der ersten axialen Seite des Stegs, wobei die Versatzebene (104) die erste Versatzstegfläche (110) von der zweiten Versatzstegfläche (112) trennt; und
Bilden eines Ausgleichsvorsprungs (102) mit einer Ausgleichsebene (114), einschließlich der folgenden Schritte:
Fertigen einer ersten Ausgleichsstegfläche (120) auf einer zweiten axialen Seite des Stegs und Bilden einer ersten Ausgleichsrundung (116), die sich von einer radial äußeren Kante der Ausgleichsebene (114) erstreckt; und
Fertigen einer zweiten Ausgleichsstegfläche (122) auf der zweiten axialen Seite des Stegs und Bilden einer zweiten Ausgleichsrundung (118), die sich von einer radial inneren Kante der Ausgleichsebene (114) erstreckt, wobei die Ausgleichsebene (114) die erste Ausgleichsstegfläche (120) von der zweiten Ausgleichsstegfläche (122) trennt;
**dadurch gekennzeichnet, dass**
sich der Versatzvorsprung (100) in einer radial inneren Hälfte der Rotorscheibe (68, 70) befindet und sich der Ausgleichsvorsprung (102) in einem radial äußeren Viertel der Rotorscheibe (68, 70) befindet.

12. Verfahren nach Anspruch 11, wobei der Schritt des Fertigens der ersten Versatzstegfläche (110) das Bilden einer ersten Versatzrundung (106) beinhaltet und der Schritt des Fertigens der zweiten Versatzstegfläche (112) das Bilden einer zweiten Versatzrundung (108) beinhaltet, und wobei sich die erste Versatzstegfläche (110) und die zweite Versatzstegfläche (112) auf einer gemeinsamen axialen Seite der Versatzebene (104) befinden.

13. Verfahren nach Anspruch 12, wobei die erste Versatzrundung (106) und die zweite Versatzrundung (108) einen Radius von 0,230 bis 0,280 Zoll (5,842 bis 7,112 mm) beinhalten.

## Revendications

1. Disque de rotor (68, 70) comprenant :
une bande s'étendant dans une direction radiale depuis un rebord sur une extrémité radialement externe jusqu'à un alésage sur une extrémité radialement interne, la bande comportant :
une saillie de désalignement (100) sur une première surface orientée axialement de la bande ; et
une saillie d'équilibrage (102) sur une seconde surface orientée axialement de la bande ;
**caractérisé en ce que**
la saillie de désalignement (100) est située dans une moitié radialement interne du disque de rotor (68, 70) et la saillie d'équilibrage (102) est située dans un quart radialement externe du disque de rotor (68, 70).

2. Disque de rotor (68, 70) selon la revendication 1, dans lequel la saillie de désalignement (100) comporte un plateau de désalignement (104) orienté dans une direction axiale et un premier congé de désalignement (106) s'étendant depuis un bord radialement externe du plateau de désalignement (104) vers une première surface de bande de désalignement (110).

3. Disque de rotor (68, 70) selon la revendication 2, dans lequel la saillie de désalignement (100) comporte un second congé de désalignement (108) s'étendant d'un bord radialement interne du plateau de désalignement (104) à une seconde surface de bande de désalignement (112).

4. Disque de rotor (68, 70) selon la revendication 3, dans lequel la première surface de bande de désalignement (110) et la seconde surface de bande de désalignement (112) sont sur un côté axial commun du plateau de désalignement (104).

5. Disque de rotor (68, 70) selon la revendication 3 ou 4, dans lequel un rayon du premier congé de désalignement (106) et du second congé de désalignement (108) est compris entre 0,230 et 0,270 pouce (5,842 et 6,858 mm).

6. Disque de rotor (68, 70) selon la revendication 3, 4 ou 5, dans lequel la saillie d'équilibrage (102) comporte un plateau d'équilibrage (114) orienté dans une direction axiale et un premier congé d'équilibrage (116) s'étendant depuis un bord radialement externe du plateau d'équilibrage (114) vers une première surface de bande d'équilibrage (120).

7. Disque de rotor (68, 70) selon la revendication 6, dans lequel la saillie d'équilibrage (102) comporte un second congé d'équilibrage (118) s'étendant depuis un bord radialement interne du plateau d'équilibrage (114) vers une seconde surface de bande d'équilibrage (122).

8. Disque de rotor (68, 70) selon la revendication 7, dans lequel la première surface de bande d'équilibrage (120) et la seconde surface de bande d'équilibrage (122) sont sur un côté axial commun du plateau d'équilibrage (114).

9. Disque de rotor (68, 70) selon une quelconque revendication précédente, dans lequel la première surface orientée axialement et la seconde surface orientée axialement sont dirigées dans des directions axiales opposées.

10. Moteur à turbine à gaz (20) comprenant :
une section de compresseur (24) ; et
une section de turbine (28) située en aval de la section de compresseur (24), dans lequel au moins l'une de la section de compresseur ou de la section de turbine comporte le disque de rotor (68, 70) selon une quelconque revendication précédente.

11. Procédé de formation d'un disque de rotor (68, 70) pour un moteur à turbine à gaz comprenant les étapes :
de formation d'une saillie de désalignement (100) ayant un plateau de désalignement (104) comportant les étapes :
d'usinage d'une première surface de bande de désalignement (110) sur un premier côté axial d'une bande ; et
d'usinage d'une seconde surface de bande de désalignement (112) sur le premier côté axial de la bande, dans lequel le plateau de désalignement (104) sépare la première surface de bande de désalignement (110) de la seconde surface de bande de désalignement (112) ; et
de formation d'une saillie d'équilibrage (102) ayant un plateau d'équilibrage (114) comportant les étapes :
d'usinage d'une première surface de bande d'équilibrage (120) sur un second côté axial de la bande et de formation d'un premier congé d'équilibrage (116) s'étendant depuis un bord radialement externe du plateau d'équilibrage (114) ; et
d'usinage d'une seconde surface de bande d'équilibrage (122) sur le second côté axial de la bande et de formation d'un second congé d'équilibrage (118) s'étendant depuis un bord radialement interne du plateau d'équilibrage (114), dans lequel le plateau d'équilibrage (114) sépare la première surface de bande d'équilibrage (120) de la seconde surface de bande d'équilibrage (122) ;
**caractérisé en ce que**
la saillie de désalignement (100) est située dans une moitié radialement interne du disque de rotor (68, 70) et la saillie d'équilibrage (102) est située dans un quart radialement externe du disque de rotor (68, 70).

12. Procédé selon la revendication 11, dans lequel l'étape d'usinage de la première surface de bande de désalignement (110) comporte la formation d'un premier congé de désalignement (106) et l'étape d'usinage de la seconde surface de bande de désalignement (112) comporte la formation d'un second congé de désalignement (108), et la première surface de bande de désalignement (110) et la seconde surface de bande de désalignement (112) étant situées sur un côté axial commun du plateau de désalignement (104).

13. Procédé selon la revendication 12, dans lequel le premier congé de désalignement (106) et le second congé de désalignement (108) comportent un rayon de 0,230 à 0,280 pouce (5,842 à 7,112 mm) .
